Europäisches Patentamt

European Patent Office

Office européen des brevets

(19)

(11) EP 0 718 986 A2

(12) EUROPÄISCHE PATENTANMELDUNG

(43) Veröffentlichungstag:
26.06.1996 Patentblatt 1996/26

(51) Int. Cl.⁶: H04B 7/015, H04B 7/08

(21) Anmeldenummer: 95120321.5

(22) Anmeldetag: 21.12.1995

(84) Benannte Vertragsstaaten:
DE ES FR GB IT SE

(30) Priorität: 22.12.1994 DE 4445850

(71) Anmelder: Alcatel Mobile Communication
Deutschland GmbH
70499 Stuttgart (DE)

(72) Erfinder: Schütz, Thomas
D-76135 Karlsruhe (DE)

(74) Vertreter: Pohl, Herbert, Dipl.-Ing.
c/o Alcatel SEL AG,
Zentralbereich Patente und Lizenzen,
Postfach 30 09 29
70449 Stuttgart (DE)

(54) **Diversity-Empfangsvorrichtung zur Kompensation der Dopplerverschiebung in einem Bahnmobilfunksystem**

(57) Durch die schnelle Vorbeifahrt einer Mobilstation (MS) an einer Funkfeststation (BTS), wie etwa beim Bahnmobilfunk, entsteht ein Dopplersprung im HF-Mobilfunksignal, der dessen Empfang stört.

Vorgeschlagen wird eine Empfangsvorrichtung (RX) mit mindestens zwei Antennen (A1, A2, A3), die jeweils einen Empfangszweig (1, 2, 3) speisen und die auf einer sich in die Fahrtrichtung der Mobilstation (MS) erstreckenden Linie soweit voneinander entfernt (Abstand d) angeordnet sind, daß zumindest eine Antenne (A2, A3) ein demodulierbares Empfangssignal (S2, S3) in den entsprechenden Empfangszweig (2, 3) einspeist, während die Mobilstation (MS) die Funkfeststation (BTS) passiert.

Die Erfindung ist sehr einfach und kostengünstig mittels Verwendung eines Diversity-Empfängers realisierbar.

Fig. 1

**Beschreibung**

Beim Mobilfunk, insbesondere beim Bahnmobilfunk, treten Frequenzverschiebungen im Mobilfunksignal auf, die durch den Dopplereffekt verursacht werden. Diese Art der Störung ist besonders dann groß, wenn Sender und Empfänger dicht aneinander vorbeifahren. In diesem Fall wird die Funkverbindung durch einen sogenannten Dopplersprung gestört, der eine Unterbrechung der Funkverbindung bewirken kann.

Aus DE 42 22 236.2 A1 ist eine Empfangsvorrichtung für eine durch den Dopplereffekt gestörte Funkübertragung bekannt. Diese Empfangsvorrichtung enthält eine Antenne, ein Empfangsteil mit Mischerstufe und eine Schaltung, die die Änderung der Signallaufzeit des Mobilfunksignals ermittelt und daraus den Eintrittszeitpunkt und den Betrag des Dopplersprungs ermittelt, um durch Änderung der Mischfrequenz die Frequenzverschiebung zu kompensieren. Für die Schaltung der bekannten Empfangsvorrichtung ist ein Steuerprogramm erforderlich.

Aufgabe der Erfindung ist es eine einfache Empfangsvorrichtung vorzuschlagen, die auch ohne Einsatz eines Steuerprogramms, für eine durch den Dopplereffekt gestörte Funkübertragung geeignet ist.

Gelöst wird die Aufgabe durch eine Empfangsvorrichtung und durch eine Verwendung einer Diversity-Empfangsvorrichtung nach einem der nebengeordneten Ansprüche.

Demnach wird eine Empfangsvorrichtung vorgeschlagen, die mindestens zwei Antennen enthält, die jeweils einen Empfangszweig speisen und die auf einer sich in die Bewegungsrichtung (Fahrtrichtung der sich bewegenden Mobilfunkeinrichtung) erstreckenden Linie soweit voneinander entfernt angeordnet sind, daß zumindest innerhalb eines der Empfangszweige ein von der entsprechenden Antenne eingespeistes Empfangssignal demodulierbar ist, während die eine Mobilfunkeinrichtung die andere passiert. Durch die mehrzweigige Empfangsvorrichtung mit dieser Antennenanordnung ist sichergestellt, daß die Funkübertragung auch nicht im Falle eines auftretenden Dopplersprungs abreißt.

Die Erfindung ist auch durch eine Verwendung einer Diversity-Empfangsvorrichtung mit mindestens zwei Antennen umsetzbar, indem die Antennen auf einer sich in die Bewegungsrichtung (Fahrtrichtung der sich bewegenden Mobilfunkeinrichtung) erstreckenden Linie soweit voneinander entfernt angeordnet werden, daß zumindest innerhalb eines der Empfangszweige ein von der entsprechenden Antenne eingespeistes Empfangssignal demodulierbar ist, während die eine Mobilfunkeinrichtung die andere passiert. Durch diese Verwendung ist eine sehr einfache Realisierung der Erfindung gegeben. Ein Vorteil der Erfindung ist es, daß ohne zusätzliche Maßnahmen die Empfangsvorrichtung auch zum Mehrwegeempfang geeignet ist.

Ausgestaltungen der Erfindung mit weiteren Vorteilen ergeben sich aus den Unteransprüchen.

Im weiteren wird die Erfindung anhand eines Ausführungsbeispiels und unter Zuhilfenahme folgender Figuren beschrieben:

Fig. 1 , die das Blockschaltbild einer Empfangsvorrichtung für den Bahnmobilfunk zeigt, und

Fig. 2 , die schematisch den Einsatz der Empfangsvorrichtung innerhalb einer im Zug und innerhalb einer an der Bahntrasse installierten Mobilfunkeinrichtung zeigt.

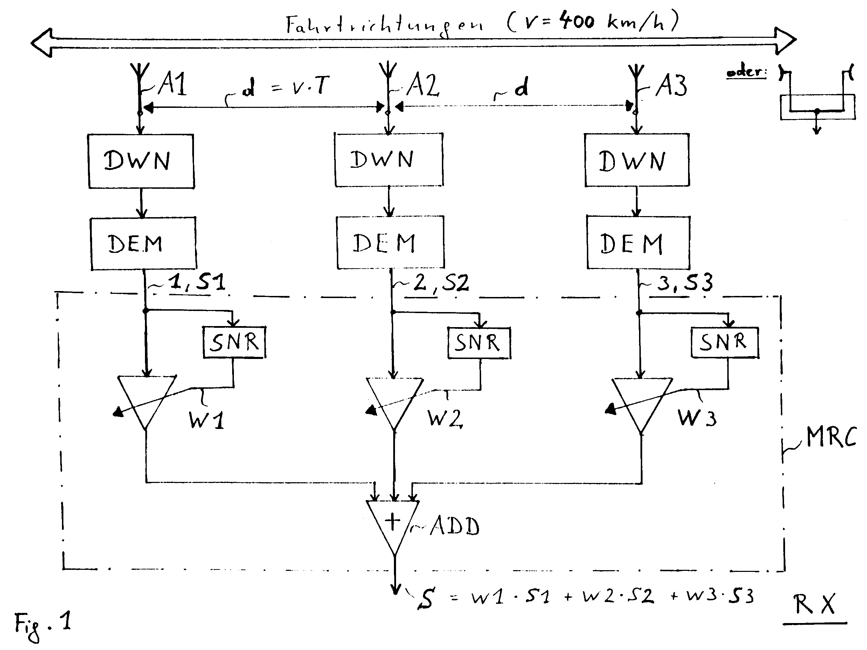

In Fig. 1 ist eine Empfangsvorrichtung RX schematisch dargestellt. Diese enthält drei Antennen A1, A2 und A3 die jeweils einen Empfangszweig 1, 2 bzw. 3 speisen. Jeder Empfangszweig enthält einen Abwärtsmischer DWN, der der entsprechenden Antenne nachgeschaltet ist und der das Empfangssignal von der HF-Lage (z.B. 900 MHz) in die ZF-Lage (z.B. 100 MHz) umsetzt. Weiterhin enthält jeder Empfangszweig einen dem Abwärtsmischer DWN nachgeschalteten Demodulator DEM, der hier nach dem GMSK-Verfahren (Gaussian Minimum Shift Keying) das Empfangssignal demoduliert. Die Ausgangssignale der Demodulatoren entsprechen somit den Quadraturkomponenten der über die verschiedenen Empfangszweige 1, 2 und 3 empfangenen Empfangssignale S1, S2 bzw. S3.

Da die Antennen A1, A2 und A3 in Fahrtrichtung so angeordnet sind, daß sie zumindest um einen Abstand d zueinander entfernt sind, können die Empfangssignale stark voneinander abweichen, insbesondere während einer Vorbeifahrt der Empfangsvorrichtung an einer Sendevorrichtung.

Der Abstand d ist so groß gewählt, daß die erwartete Störung, d.h. hier der Dopplersprung, innerhalb der Empfangssignale S1, S2 und S3 zu unterschiedlichen Zeitpunkten auftritt, wobei zwischen den Zeitpunkten mindestens eine Zeitdauer T verstreicht, die ausreicht um die Störung innerhalb der Demodulation zu kompensieren. Hier benötigt der Demodulator DEM etwa eine Zeitdauer von T = 115 ms, um einen Dopplersprung von etwa 660 Hz zu kompensieren, wie er bei einer Fahrgeschwindigkeit von V = 400 km/h und einer Trägerfrequenz von 900 MHz auftritt. Der Abstand d berechnet sich dann zu d = V · T = 400 km/h · 115 ms ≈ 13 m.

Zur Verarbeitung der an den Ausgängen der Demodulatoren DEM anliegenden Empfangssignale S1, S2 und S3 enthält die Empfangsvorrichtung RX eine Schaltung MRC, die prüft, welche der Empfangssignale demodulierbar, d.h. nur gering gestört, sind. Dazu enthält die Schaltung MRC drei Meßstufen SNR zur Messung der Signal-Rauschabstände der drei Empfangssignale S1, S2 und S3 und zur Berechnung von drei Wichtungsfaktoren W1, W2 und W3. Jeder Wichtungsfaktor hat entsprechend dem gemessenen Signal-Rauschabstand einen Betrag zwischen 0 und 1 (= 100%).

Die Schaltung MRC enthält weiterhin drei Wichtungsstufen die entsprechend den Wichtungsfaktoren W1, W2 und W3 die Empfangssignale S1, S2 bzw. S3 wichten. Weiterhin enthält die Schaltung MRC eine Addierstufe ADD zur Bildung eines Ausgangssignals S aus der Summe der gewichteten Empfangssignale W1 · S1, W2 · S2 und W3 · S3. Dadurch werden die Empfangssignale S1, S2 und S3 entsprechend ihres Signal-Rauschabstandes, d.h. entsprechend ihrer Signalqualität, miteinander zu einem Ausgangssignal S verknüpft.

Demnach arbeitet die Schaltung MRC nach dem sogenannten Maximum-Ratio-Combining, das zum Mehrwegeempfang benutzt wird. Somit kann die Empfangsvorrichtung RX nach Fig. 1 auch durch eine Verwendung einer Diversity-Empfangsvorrichtung mit einem Maximum Ratio Combiner realisiert werden, in dem die Antennen dieser Diversity-Empfangsvorrichtung sehr weit voneinander entfernt, d.h. mindestens im Abstand d >> λ, und in Fahrtrichtung angeordnet werden. Sowohl einer Störung durch Mehrwegeempfang als auch durch den Dopplereffekt wird dadurch begegnet.

Neben der in Fig. 1 gezeigten Ausführung ist es auch denkbar die Schaltung zur Auswertung der verschiedenen Empfangssignale als Schaltstufe auszuführen, die nur denjenigen Empfangszweig mit der besten Signalqualität zum Ausgang der Empfangsvorrichtung durchschaltet.

Auch ist es denkbar die Antennen als Richtantennen auszuführen die in die Fahrtrichtungen ausgerichtet sind, wodurch die Vorteile einer Richtfunkübertragung wie etwa hoher Antennengewinn, geringe Sendeleistung und geringe Störempfindlichkeit, zum Tragen kommt.

Die Empfangsvorrichtung kann auch so ausgeführt sein, das die Auswertung und Verknüpfung der Empfangssignale bereits in HF- oder ZF-Lage erfolgt. Es ist eine analoge als auch eine digitale, insbesondere eine DSP-gesteuerte (Digitaler-Signal-Prozessor), Schaltung denkbar.

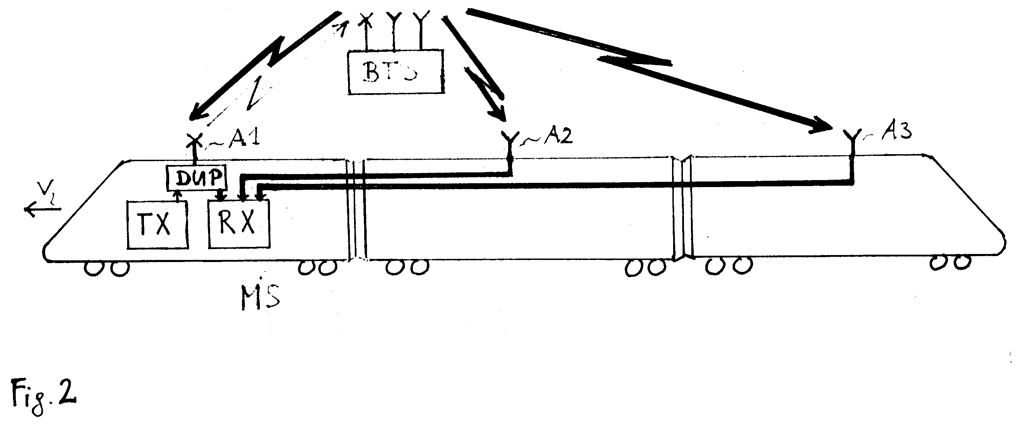

In Fig. 2 ist schematisch dargestellt, wie die erfindungsgemäße Empfangsvorrichtung für eine Funkübertragung im Bahnmobilfunk verwendbar ist.

In diesem Beispiel ist in einem Hochgeschwindigkeitszug eine Mobilfunkeinrichtung MS mit einer Sendevorrichtung TX, mit der Empfangsvorrichtung RX und mit einem Duplexer DUP integriert. Diese Mobilfunkeinrichtung wird im weiteren Mobilstation MS genannt. Der Hochgeschwindigkeitszug, der z.B. eine maximale Fahrgeschwindigkeit von V = 400 km/h hat, ist über die Mobilstation MS funkverbunden mit stationären Mobilfunkeinrichtungen zum Austausch von Sprach- und Datensignalen für eine Betriebs- und Steuerungskommunikation. Denkbar ist auch die Funkverbindung für eine Kommunikation von Fahrgästen mit dem öffentlichen Telekommunikationsnetz zu nutzen. In Fig. 2 ist beispielshaft nur eine der stationären Mobilfunkeinrichtungen gezeigt, die im weiteren kurz Feststation BTS genannt wird.

In diesem Beispiel haben die Feststation BTS und die Mobilstation MS dieselbe Verschaltung von der Sendevorrichtung TX, der Empfangsvorrichtung RX, dem Duplexer DUP und den Antennen A1, A2 und A3. Diese Verschaltung wird nun kurz beschrieben:

Der Duplexer DUP ist mit einer der Antennen A1, mit der Sendevorrichtung TX und mit einer der Empfangszweige der Empfangsvorrichtung RX verbunden. Demnach dient diese Antenne A1 zum Senden und zum Empfangen. Die verbleibenden zwei Empfangszweige der Empfangsvorrichtung sind jeweils mit einer der beiden weiteren Antennen A2 bzw. A3 verbunden. Diese Antennen dienen demnach nur zum Empfang. Durch die bereits beschriebene Anordnung der Antennen kann die Empfangsvorrichtung RX die Störungen bei der Funkübertragung kompensieren. Die gezeigte Verschaltung ermöglicht einen gegen Störungen unempfindlichen Sendeempfang mittels weniger Antennen. Es ist auch denkbar nur zwei Antennen einzusetzen. Diese könnten etwa am Anfang und am Ende des Hochgeschwindigkeitszuges auf den Triebköpfen montiert sein. Mit steigender Anzahl der verwendeten Antennen nimmt aufgrund der Verknüpfung aller Empfangssignale innerhalb der Empfangsvorrichtung RX die Signalgüte des Ausgangssignals zu.

Die beschriebene Ausführungsform der Erfindung steht beispielhaft für zahlreiche andere denkbare Ausgestaltungen, wie etwa für die Funkkommunikation bei Magnetschwebbahnen oder für die Transportüberwachung mit Hilfe sogenannter Funk-Balisen.

**Patentansprüche**

1. Empfangsvorrichtung (RX) für eine durch den Dopplereffekt gestörte Funkübertragung zwischen zwei sich relativ zueinander bewegenden Mobilfunkeinrichtungen (MS, BTS) mit mindestens zwei Antennen (A1, A2, A3), die jeweils einen Empfangszweig (1, 2, 3) speisen und die auf einer sich in die Bewegungsrichtung (Fahrtrichtung der sich bewegenden Mobilfunkeinrichtung) erstreckenden Linie soweit voneinander entfernt angeordnet sind, daß zumindest eine Antenne (A2, A3) ein demodulierbares Empfangssignal (S2, S3) in den entsprechenden Empfangszweig (2, 3) einspeist, während die eine Mobilfunkeinrichtung (MS) die andere (BTS) passiert.

2. Empfangsvorrichtung (RX) nach Anspruch 1, bei der die Antennen (A1, A2, A3) um mindestens einen Abstand (d) voneinander entfernt angeordnet sind, der sich im wesentlichen durch das Produkt aus der Fahrgeschwindigkeit (V), die die eine Mobilfunkeinrichtung (MS) relativ zur anderen hat, und der Zeitdauer (T) berechnet, die bei einer Demodulation des zumindest einen Empfangssignals (S2, S3) zur Kompensation der durch den Dopplereffekt bewirkten Frequenzverschiebung benötigt wird (d = V · T).

3. Empfangsvorrichtung (RX) nach Anspruch 1, die weiterhin eine mit den Empfangszweigen (1, 2, 3) verbundene Schaltung (MRC) enthält, die mittels einer Auswertung aller Empfangssignale (S1, S2, S3) prüft, welche (S2, S3) der Empfangssignale hinreichend gut demodulierbar sind.

4. Empfangsvorrichtung (RX) nach Anspruch 3, bei der die Schaltung (MRC) mindestens eine Meßstufe (SNR) enthält, die zur Auswertung der Empfangssignale deren Signalqualität, insbesondere deren Signal-Rausch-Abstand, mißt.

5. Empfangsvorrichtung (RX) nach Anspruch 3, bei der die Schaltung (MRC) mittels einer Verknüpfung der hinreichend gut demodulierbaren Empfangssignale (S2, S3) ein Ausgangssignal (S) der Empfangsvorrichtung (RX) bildet für eine nachfolgende Signalverarbeitung.

6. Empfangsvorrichtung (RX) nach Anspruch 5, bei der die Schaltung (MRC) zur Verknüpfung der Empfangssignale (S2, S3) Wichtungsstufen enthält, die in die Empfangszweige (1, 2, 3) geschaltet sind, zur Wichtung der Empfangssignale (S1, S2, S3) mit Wichtungsfaktoren (W1, W2, W3), die durch die Auswertung der Empfangssignale bestimmt sind.

7. Empfangsvorrichtung (RX) nach Anspruch 6, bei der die Schaltung (MRC) weiterhin eine Addierstufe (ADD) enthält, die durch Addition der gewichteten Empfangssignale das Ausgangssignal (S) bildet.

8. Empfangsvorrichtung nach Anspruch 3, bei der die Schaltung nach der Auswertung der empfangenen Mobilfunksignale aus diesen dasjenige bestimmt, das am besten demodulierbar ist, und den entsprechenden Empfangspfad für eine nachfolgende Signalverarbeitung zum Ausgang der Empfangsvorrichtung durchschaltet.

9. Mobilfunkeinrichtung (MS) die eine Empfangsvorrichtung (RX) für eine durch den Dopplereffekt gestörte Funkübertragung enthält mit mindestens zwei Antennen (A1, A2, A3), die jeweils einen Empfangszweig (1, 2, 3) speisen und die auf einer sich in die Bewegungsrichtung (Fahrtrichtung der sich bewegenden Mobilfunkeinrichtung) erstreckenden Linie soweit voneinander entfernt angeordnet sind, daß zumindest eine Antenne (A2, A3) ein demodulierbares Empfangssignal (S2, S3) in den entsprechenden Empfangszweig (2, 3) einspeist, während die eine Mobilfunkeinrichtung (MS) die andere (BTS) passiert.

10. Verwendung einer Diversity-Empfangsvorrichtung (RX), die mindestens zwei Antennen (A1, A2, A3) zur Speisung jeweils eines Empfangszweiges (1, 2, 3) enthält, für eine durch den Dopplereffekt gestörte Funkübertragung zwischen zwei sich relativ zueinander bewegenden Mobilfunkeinrichtungen (MS, BTS), indem die Antennen (A1, A2, A3) auf einer sich in die Bewegungsrichtung (Fahrtrichtung der sich bewegenden Mobilfunkeinrichtung) erstreckenden Linie soweit voneinander entfernt angeordnet werden, daß zumindest eine Antenne (A2, A3) ein demodulierbares Empfangssignal (S2, S3) in den entsprechenden Empfangszweig (2, 3) einspeist, während die eine Mobilfunkeinrichtung (MS) die andere (BTS) passiert.

Fahrtrichtungen ( $v = 400$ km/h )

$d = v \cdot T$   $\sim d$

A1   A2   A3

oder:

DWN   DWN   DWN

DEM   DEM   DEM

$\sim 1, S1$   $\sim 2, S2$   $\sim 3, S3$

SNR   SNR   SNR

W1   W2   W3

$\sim$ MRC

$+ \sim$ ADD

$S = w1 \cdot S1 + w2 \cdot S2 + w3 \cdot S3$

R X

Fig. 1

EP 0 718 986 A2

Fig. 2

EP 0 718 986 A2